# EUROPEAN PATENT APPLICATION

(11) **EP 4 592 767 A1**
(43) Date of publication of application: **30.07.2025**
(21) Application number: 25153151.3
(22) Date of filing: 21.01.2025
(51) Int. Cl.: G04C 3/00, G06F 1/16, H01H 35/02

(54) **ELECTRONIC TIMEPIECE, METHOD FOR CONTROLLING TIMEPIECE, AND PROGRAM**

(30) Priority: 26.01.2024 JP 2024009890
(71) Applicant: CASIO COMPUTER CO., LTD., Tokyo 151-8543 (JP)
(72) Inventor: Matsuzawa, Koichi, Hamura-shi, Tokyo, 205-8555 (JP)
(74) Representative: Grünecker Patent- und Rechtsanwälte PartG mbB

(57) **Abstract**

Disclosed is an electronic timepiece (1), including: a tilt switch (70) mounted in a predetermined position; and a controller (11) that changes an operation mode of the electronic timepiece (1), based on a duration for which there is no change in an output signal of the tilt switch (70), from a normal mode to a first power saving mode in which power consumption is suppressed more than in the normal mode.

## Description

### TECHNICAL FIELD

The present disclosure relates to an electronic timepiece, a method for controlling an electronic timepiece, and a program.

### DESCRIPTION OF RELATED ART

For an electronic timepiece such as a small wristwatch with limited battery capacity, a technology has been known that extends battery life by switching the electronic timepiece to a power saving mode when a certain condition is satisfied. For example, JP 2016-6436A discloses a technology for switching an electronic timepiece that includes a solar cell to a power saving mode, depending on a power generation status of the solar cell.

### SUMMARY OF THE INVENTION

An electronic timepiece (1) according to the present disclosure comprises: a tilt switch (70) mounted in a predetermined position; and a controller (11) that changes an operation mode of the electronic timepiece (1), based on a duration for which there is no change in an output signal of the tilt switch (70), from a normal mode to a first power saving mode in which power consumption is suppressed more than in the normal mode.

Further features of the present invention will become apparent from the following description of exemplary embodiments (with reference to the attached drawings).

### BRIEF DESCRIPTION OF DRAWINGS

The accompanying drawings are not intended as a definition of the limits of the invention but illustrate embodiments of the invention, and together with the general description given above and the detailed description of the embodiments given below, serve to explain the principles of the invention, wherein:
FIG. 1 is a diagram illustrating an electronic timepiece and a smartphone;
FIG. 2 is a diagram illustrating a display of the electronic timepiece;
FIG. 3 is a block diagram illustrating a functional configuration of the electronic timepiece;
FIG. 4 is a diagram illustrating a configuration of a tilt switch;
FIG. 5 is a cross-sectional view of the configuration of the tilt switch;
FIG. 6 is a diagram illustrating the display of the electronic timepiece operating in a first power saving mode;
FIG. 7 is a flowchart illustrating a control procedure of a timepiece control process;
FIG. 8 is a flowchart illustrating a control procedure of a transition process to the first power saving mode;
FIG. 9 is a flowchart illustrating a control procedure of a transition process to a second power saving mode;
FIG. 10 is a flowchart illustrating a control procedure of a return process;
FIG. 11 is a diagram illustrating a display of an electronic timepiece when the electronic timepiece is an analog timepiece; and
FIG. 12 is a diagram illustrating a variation in an orientation of the tilt switch.

### DETAILED DESCRIPTION

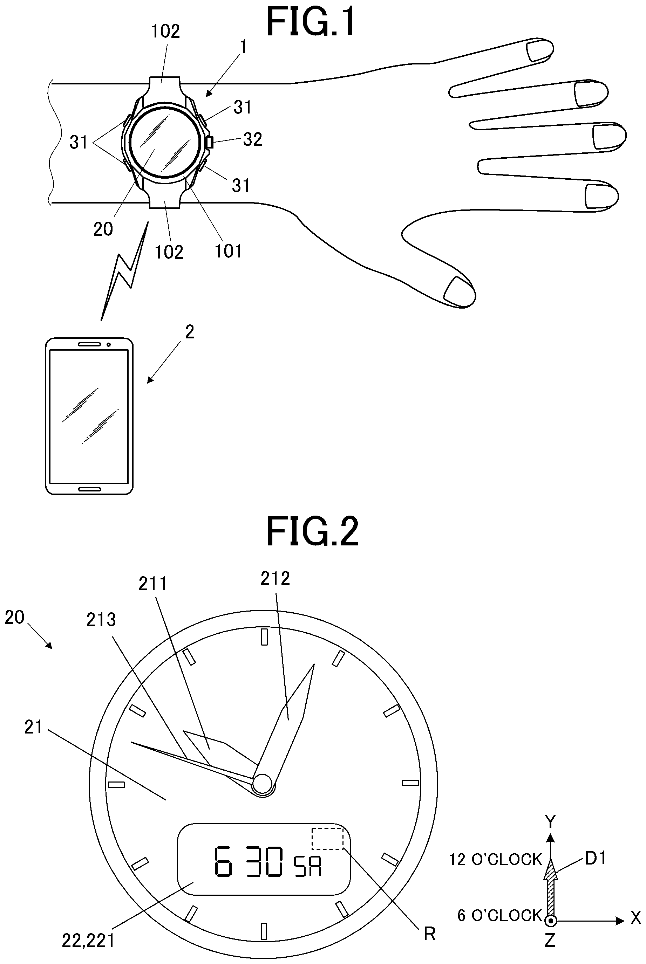

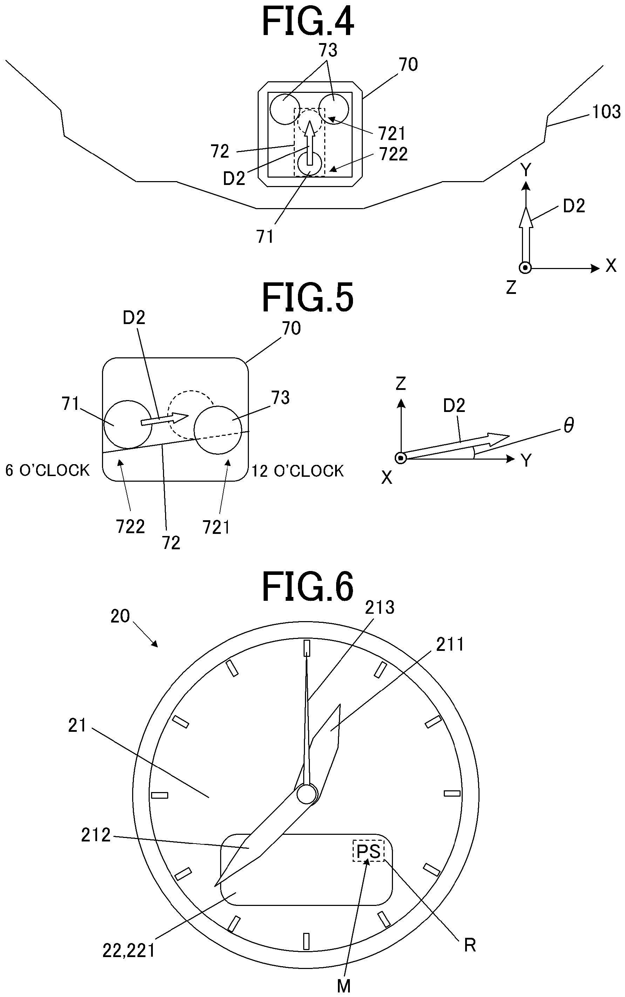

Hereinafter, one or more embodiments according to the present disclosure will be described with reference to the drawings. As illustrated in FIG. 1, an electronic timepiece 1 according to the present embodiment includes a housing 101 and two bands 102 attached to the housing 101. The electronic timepiece 1 is a wristwatch used by being worn on a wrist of a user by wrapping the bands 102 around the wrist. The housing 101 houses a display 20 and a circuit board 103 (see FIG. 4), and the like. The housing 101 includes, on the side, operation buttons 31 for receiving a user operation and a crown 32. An opening of the housing 101 on a side facing a display surface of the display 20 is sealed with a transparent watch glass. In the present specification, a position of the housing 101 when the electronic timepiece 1 is worn represents a wearing position of the electronic timepiece 1. In FIG. 1, the electronic timepiece 1 is worn on the back of the hand on the wrist. The electronic timepiece 1 is capable of communicating data with a smartphone 2 (external device) via short-range wireless communication. In the present embodiment, Bluetooth (registered trademark) Low Energy (BLE) is used as the short-range wireless communication. However, a communication method other than BLE may be used.

As illustrated in FIG. 2, the display 20 of the electronic timepiece 1 includes an analog display 21 that displays a time in an analog manner using an hour hand 211, a minute hand 212, and a second hand 213, and a digital display 22 that displays information in a digital manner using a liquid crystal display panel 221. In FIG. 2, the digital display 22 shows a date and a day of the week, but the information displayed by the digital display 22 is not limited to these. Hereinafter, the hour hand 211, minute hand 212, and second hand 213 are collectively referred to as the "pointing hands 211 to 213." In a plane parallel to the display surface (dial) of the analog display 21, the 3 o'clock direction is referred to as the X direction and the 12 o'clock direction as the Y direction. The direction that is perpendicular to the X and Y directions and goes from the back side of the electronic timepiece 1 to the front side is referred to as the Z direction. A direction from the position of the hour hand representing 6 o'clock in the analog display 21 to the position of the hour hand representing 12 o'clock (direction from 6 o'clock to 12 o'clock) is referred to as a "direction D1." As illustrated in FIG. 2, the direction D1 is parallel to the Y direction. The state in which the XY coordinate plane (dial) is parallel to the horizontal plane is referred to as the horizontal state of the electronic timepiece 1.

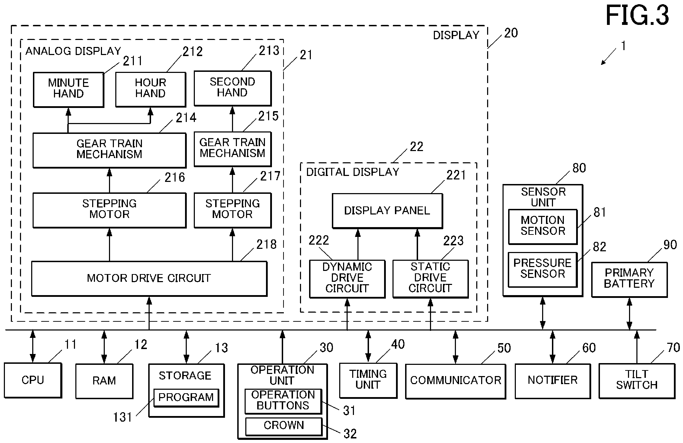

FIG. 3 is a block diagram illustrating a functional configuration of the electronic timepiece 1. The electronic timepiece 1 includes a central processing unit (CPU) 11 (controller, control means), a random-access memory 12 (RAM), a storage 13, a display 20, an operation unit 30, a timing unit 40, a communicator 50, a notifier 60, a tilt switch 70, a sensor unit 80, and a primary battery 90. Each component of the electronic timepiece 1 is connected via a communication path such as a bus and operates using electric power supplied from the primary battery 90.

The CPU 11 is a processor (at least one processor) that reads and executes a program 131 stored in the storage 13 to perform various arithmetic processing, thereby controlling an operation of the electronic timepiece 1. The electronic timepiece 1 may include a plurality of processors (e.g., a plurality of CPUs), and the plurality of processors may execute a plurality of processes executed by the CPU 11 according to the present embodiment. In this case, the controller includes the plurality of processors. In addition, the plurality of processors may be involved in a common process, or the plurality of processors may independently execute different processes in parallel. The RAM 12 provides a working memory space for the CPU 11 and stores temporary data.

The storage 13 is a non-transitory recording medium readable by the CPU 11 serving as a computer and stores the program 131 and various data. The storage 13 includes, for example, a nonvolatile memory such as a flash memory. The program 131 is stored in the storage 13 in a form of a computer-readable program code. Examples of the data stored in the storage 13 include various setting data referred to by the CPU 11 when the program 131 is executed.

The analog display 21 of the display 20 includes a gear train mechanism 214 that is a gear train coupled to the hour hand 211 and the minute hand 212, a gear train mechanism 215 that is a gear train coupled to the second hand 213, stepping motors 216 and 217 that respectively rotate the gear train mechanisms 214 and 215, and a motor drive circuit 218 that drives the stepping motors 216 and 217. The hour hand 211 and the minute hand 212 rotate by an angle corresponding to one second in accordance with a step operation of the stepping motor 216 transmitted via the gear train mechanism 214. That is, the hour hand 211 and the minute hand 212 rotate in conjunction with the step operation of the stepping motor 216. However, the present invention is not limited thereto, and a gear train mechanism and a stepping motor corresponding to each of the hour hand 211 and the minute hand 212 may be provided so that the hour hand 211 and the minute hand 212 independently rotate. The second hand 213 rotates by an angle corresponding to one second in accordance with a step operation of the stepping motor 217 transmitted via the gear train mechanism 215. The second hand 213 is coupled to the gear train mechanism 215 and stepping motor 217, which are separate from the gear train mechanism 214 and stepping motor 216 coupled to the hour hand 211 and minute hand 212. This allows the second hand 213 to rotate independently of the hour hand 211 and minute hand 212.

The stepping motors 216 and 217 are step-driven based on the voltage waveform of respective drive pulses input from the motor drive circuit 218 to rotate the pointing hands 211 to 213 in the normal rotation direction (direction in which time progresses) or the reverse rotation direction (direction in which time regresses) by the predetermined rotation angle described above. The motor drive circuit 218 outputs a drive voltage pulse at a suitable time and pulse width for driving each of the stepping motors 216 and 217 to perform a step operation in response to a control signal input from the CPU 11.

The digital display 22 includes the liquid crystal display panel 221, a dynamic drive circuit 222 that drives the liquid crystal display panel 221, and a static drive circuit 223. The static drive circuit 223 displays a power saving mark M (see FIG. 6) in a static display region R of a display region of the liquid crystal display panel 221 illustrated in FIG. 2 using a static drive method. The dynamic drive circuit 222 displays information such as a date, day of the week, and time using a dynamic drive method (duty drive method) in a region of the liquid crystal display panel 221 excluding the static display region R. FIG. 2 illustrates a configuration in which numbers or characters are displayed by the dynamic drive circuit 222 in a seven-segment method, but the present invention is not limited thereto. A dot matrix method may be used in which any numbers or characters are displayed by a combination of a plurality of pixels arranged in a matrix. In the present embodiment, the power consumed by the static drive circuit 223 per unit time to display the power saving mark M is significantly less than the power consumed by the dynamic drive circuit 222 per unit time to display the information such as the date and day of the week. The dynamic drive circuit 222 and the static drive circuit 223 operate independently of each other in accordance with a control signal transmitted from the CPU 11. This makes it possible to perform a control such that the dynamic drive circuit 222 stops operating and only the power saving mark M is displayed using the static drive circuit 223, thereby reducing the power consumption of the digital display 22.

The operation unit 30 includes operation means such as the operation buttons 31 and the crown 32 illustrated in FIG. 1, and outputs an operation signal corresponding to an operation performed on the operation means to the CPU 11.

The timing unit 40 includes an oscillation circuit, a division circuit, and a timing circuit, and the like. The timing unit 40 counts and holds the current date and time by dividing a clock signal generated by the oscillation circuit by the division circuit and counting the divided signal by the timing circuit.

The communicator 50 is a communication module that includes an antenna, a modulation and demodulation circuit, a signal processing circuit, and the like. The communicator 50 performs wireless data communication with the smartphone 2 in accordance with the BLE communication standard.

The notifier 60 includes a speaker and outputs a predetermined notification sound at a timing according to a control signal transmitted from the CPU 11. The method of notification by the notifier 60 is not limited to the output of a notification sound by a speaker. For example, the notifier 60 may include a light emitter, and perform the notification by light emission from the light emitter. Further, the notifier 60 may include a vibrator (vibration unit), and perform the notification by vibration of the vibrator.

The tilt switch 70 is a switch element that switches on and off according to the tilting position of the housing 101 of the electronic timepiece 1. FIGs. 4 and 5 are diagrams illustrating a configuration of the tilt switch 70. FIG. 4 is an enlarged view of a region around the bottom (around 6 o'clock) of the circuit board 103 inside the housing 101. FIG. 5 is a cross-sectional view of the tilt switch 70 viewed from the +X direction. However, the mounting position of the tilt switch 70 is not limited to the region around 6 o'clock. The tilt switch 70 is mounted on the circuit board 103 in a predetermined position. The tilt switch 70 includes a metal ball 71, a passage 72, and a pair of contacts 73. The metal sphere 71 is a spherical movable body with electrical conductivity. The passage 72 is provided so that the metal ball 71 can move in only one direction according to gravity. The passage 72 has one end 721 and the other end 722 in the one direction described above. At the one end 721 of the passage, the pair of contacts 73 is disposed. When the metal ball 71 moves to the one end 721 of the passage 72, the metal ball 71 comes into contact with the pair of contacts 73, so that the contacts 73 are electrically connected to each other via the metal ball 71. The tilt switch 70 outputs a predetermined output signal to the CPU 11 when the pair of contacts 73 is electrically connected via the metal ball 71. When the metal ball 71 moves away from the pair of contacts 73, so that the contacts 73 are not electrically connected to each other, the tilt switch 70 stops outputting the output signal. Hereinafter, a state in which the metal ball 71 is in contact with the pair of contacts 73 and the contacts 73 are electrically connected is referred to as an "ON state", and a state in which the metal ball 71 is not in contact with the pair of contacts 73 and the contacts 73 are not electrically connected is referred to as an "OFF state".

In a predetermined position, the tilt switch 70 is mounted so that a direction D2 from the other end 722 to the one end 721 and the direction D1 from 6 o'clock to 12 o'clock of the electronic timepiece 1 are the same when viewed from the +Z direction. That is, the direction in which the direction D2 is projected onto the XY plane coincides with the Y direction. From another perspective, in a predetermined position, the tilt switch 70 is mounted so that when the electronic timepiece 1 is worn on the back of the hand on the wrist, the one end 721 is closer to the little finger of the hand than the other end 722 as illustrated in FIG. 1. Hereinafter, the orientation of the tilt switch 70 is represented by the direction indicated by the arrow of the direction D2 among the directions of 1 o'clock to 12 o'clock of the electronic timepiece 1. The tilt switch 70 illustrated in FIG. 4 is oriented in the 12 o'clock direction.

As illustrated in FIG. 5, the direction D2 (i.e., the direction in which the passage 72 extends) is titled so that the 12 o'clock side is higher than the 6 o'clock side with respect to the XY plane parallel to the dial. Hereinafter, an angle between the direction D2 and the XY plane is denoted by θ. When the electronic timepiece 1 is in the horizontal state, as illustrated in FIG. 5, the direction D2 is tilted upward by the angle θ with respect to the horizontal plane. Thus, when the tilt switch 70 is mounted so that the direction D2 is tilted with respect to the XY plane and the orientation is in the 12 o'clock direction, the tilt switch 70 is in the ON state at a tilting position where the 12 o'clock side of the electronic timepiece 1 is lower than the 6 o'clock side. Specifically, when the electronic timepiece 1 is tilted so that the 12 o'clock side of the dial is lower than the 6 o'clock side by a tilt angle greater than the angle θ, the direction D2 is tilted downward with respect to the horizontal plane (so as to have a component directed downward in the vertical direction). This causes the metal ball 71 to move towards the one end 721 of the passage 72 and make contact with the contacts 73, thereby switching the tilt switch 70 to the ON state. When the direction D2 is tilted upward again with respect to the horizontal plane (e.g., when the electronic timepiece 1 returns to the horizontal state), the metal ball 71 moves away from the contacts 73, thereby switching the tilt switch 70 to the OFF state.

The sensor unit 80 includes a motion sensor 81 and a pressure sensor 82. The motion sensor 81 includes a three-axis acceleration sensor and a three-axis angular velocity sensor, and detects acceleration and angular velocity generated in the electronic timepiece 1 in response to a user's motion. The CPU 11 counts the number of steps taken by the user who walks or runs based on periodic changes in the acceleration and angular velocity detected by the motion sensor 81. For example, the pressure sensor 82 is a semiconductor pressure sensor that uses a piezoresistive effect to detect the magnitude of atmospheric pressure. The CPU 11 calculates the altitude based on the detection result of the pressure sensor 82.

The primary battery 90 is a button cell, for example. The electronic timepiece 1 according to the present embodiment includes only the primary battery 90 as a power source and does not include a solar cell or a rechargeable secondary battery.

Next, an operation of the electronic timepiece 1 will be described. An operating mode of the electronic timepiece 1 according to the present embodiment can be switched between a normal mode and a power saving mode. In the power saving mode, power consumption is suppressed more than in the normal mode. Further, the power saving mode includes a first power saving mode and a second power saving mode in which the power consumption is suppressed even more than in the first power saving mode.

FIG. 2 illustrates the display 20 of the electronic timepiece 1 operating in the normal mode. In the normal mode, the CPU 11 causes the pointing hands 211 to 213 of the analog display 21 to display the time (hours, minutes, and seconds), and causes the digital display 22 to display predetermined information such as the date and day of the week. In addition, the CPU 11 receives time information from the smartphone 2 via the communicator 50 four times a day at predetermined times, and corrects the time counted by the timing unit 40. Further, the CPU 11 transmits sensing information such as the number of steps, the atmospheric pressure, and the altitude calculated based on the detection data of the sensor unit 80 to the smartphone 2 via the communicator 50 at a predetermined timing. Thus, the electronic timepiece 1 can operate in cooperation with the smartphone 2 by transmitting and receiving data to and from the smartphone 2. Hereinafter, reception of data from the smartphone 2 and transmission of data to the smartphone 2 are collectively referred to as "cooperative transmission and reception".

In the normal mode, when a predetermined first transition condition is satisfied, the CPU 11 switches the electronic timepiece 1 from the normal mode to the first power saving mode. FIG. 6 illustrates the display 20 of the electronic timepiece 1 operating in the first power saving mode. In the first power saving mode, the CPU 11 stops the second hand 213. In addition, the CPU 11 stops the display of the information such as the date and day of the week by the dynamic drive circuit 222 of the digital display 22. Further, the CPU 11 causes the static drive circuit 223 to blink the power saving mark M in the static display region R of the digital display 22. The blinking cycle may be, for example, about 0.5 seconds to 1 second. In FIG. 6, a character "PS" is exemplified as the power saving mark M, but the present invention is not limited thereto, and a predetermined symbol, figure, or the like may be used. Thus, by stopping the second hand 213 and stopping the display of the digital display 22 by the dynamic drive circuit 222, the power consumption of the electronic timepiece 1 per unit time in the first power saving mode can be reduced compared to the power consumption of the electronic timepiece 1 per unit time in the normal mode.

In the first power saving mode, as in the normal mode, the CPU 11 performs cooperative transmission and reception with the smartphone 2 via the communicator 50 at a predetermined timing (at a predetermined time interval). As a result, accurate time information can be obtained from the smartphone 2 even in the first power saving mode. In addition, it is possible to perform an operation such as transmitting sensing information (such as the number of steps, atmospheric pressure, and altitude) based on data from the sensor unit 80 acquired during the day to the smartphone 2 during the night (during the first power saving mode). As described later, the electronic timepiece 1 is motionless while the first power saving mode is in effect, and the process of counting the number of steps is inevitably not performed.

The first transition condition described above is satisfied when a motionless duration for which the electronic timepiece 1 has remained motionless exceeds a predetermined first reference time within a period between a predetermined determination start time and a predetermined determination end time. In the present embodiment, the determination start time is set at 10 PM, and the determination end time is set at 6 AM. Thus, if the electronic timepiece 1 has been motionless for the first reference time or longer in the night period during which the user does not normally use the electronic timepiece 1, the electronic timepiece 1 is considered not to be worn, and the operation mode is changed to the first power saving mode. The state in which the electronic timepiece 1 is motionless is, for example, a state in which the electronic timepiece 1 is not being worn and is placed on a table or in a drawer.

Whether the electronic timepiece 1 is motionless is determined based on the output signal from the tilt switch 70. While the electronic timepiece 1 is motionless, the tilt switch 70 remains in the ON state or in the OFF state, so that the output signal output from the tilt switch 70 does not change. In other words, there is no change in the ON state or the OFF state of the tilt switch 70. Therefore, the duration for which the output signal of the tilt switch 70 remains unchanging (duration for which there is no change in the ON state or the OFF state) can be set as the motionless duration described above. Thus, by switching the electronic timepiece to the first power saving mode based only on the duration for which there is no change in the output signal of the tilt switch 70, the life of the primary battery 90 can be extended even with a simple configuration. In addition, regardless of the brightness of the surrounding environment of the electronic timepiece 1, that is, even if the electronic timepiece 1 does not include a brightness sensor, the electronic timepiece 1 can be switched to the first power saving mode at a suitable time.

Orienting the tilt switch 70 in the 12 o'clock direction allows the tilt switch 70 to be easily switched between the ON and OFF states by natural actions of the user wearing the electronic timepiece 1 on the back of the hand. The tilt switch 70 is in the ON state when the direction D2 is tilted downward in the vertical direction with respect to the horizontal plane, that is, when the 12 o'clock side of the electronic timepiece 1 is lower than the 6 o'clock side with a tilt angle greater than the angle θ. When the user's hand is in front of the torso, the electronic timepiece 1 tends to be at such a tilting position in a natural posture. For example, the tilt switch 70 tends to be in the ON state in natural actions such as working on a computer, reading a book, and crossing one's arms. When the electronic timepiece 1 returns to the horizontal state, which tilts the direction D2 upwards, the tilt switch 70 is in the OFF state. Therefore, by orienting the tilt switch 70 in the 12 o'clock direction, the tilt switch 70 is easily switched between the ON and OFF states while the user is wearing the electronic timepiece 1.

When the tilt switch 70 is oriented in the 6 o'clock direction, the tilt switch 70 is in the ON state only in a special action, such as bringing the back of the hand in front of the face to check the time on the electronic timepiece 1. During other actions, the tilt switch 70 is less likely to be in the ON state and tends to remain in the OFF state. Therefore, when the tilt switch 70 is mounted in the 6 o'clock direction, even though the electronic timepiece 1 is being worn, the tilt switch 70 tends to remain in the OFF state, which makes it likely that the output signal from the tilt switch 70 remains unchanged. This is likely to lead to an erroneous determination that the electronic timepiece 1 is motionless.

In the present embodiment, the first reference time used for determining the first transition condition is set to 150 minutes. Therefore, if electronic timepiece 1 is motionless at 10:00 PM and remains motionless thereafter, the first transition condition will be satisfied 150 minutes after 10:00 PM, that is, at 12:30 AM, and the electronic timepiece 1 will be switched to the first power saving mode. Specifically, the CPU 11 switches the electronic timepiece 1 to the first power saving mode when a 10-minute carry is counted 16 times after 10 PM (including the count at exactly 10 PM) without a change in the output signal from the tilt switch 70. Here, a 10-minute carry is counted at 0 minutes and 0 seconds every hour, and every 10 minutes thereafter. In other words, a 10-minute carry occurs when the minute's ones digit and the seconds change to "0 minutes and 00 seconds". Specifically, a 10-minute carry occurs when that the time changes from 9 minutes 59 seconds to 10 minutes 00 seconds, from 19 minutes 59 seconds to 20 minutes 00 seconds, from 29 minutes 59 seconds to 30 minutes 00 seconds, from 39 minutes 59 seconds to 40 minutes 00 seconds, from 49 minutes 59 seconds to 50 minutes 00 seconds, or from 59 minutes 59 seconds to 00 minutes 00 seconds. For example, if there is a change in the output signal of the tilt switch 70 at 11:15:45 PM, the first count (10-minute carry) will be performed at 11:20:00 PM and the sixteenth count (10-minute carry) will be performed at 1:50:00 AM the following day. Thus, the second hand 213 is always at the 12 o'clock position and indicates 0 seconds at the time of the sixteenth count for the transition to the first power saving mode. As a result, the second hand 213 stops at the 12 o'clock position in the first power saving mode. Therefore, the user can easily recognize that it is the first power saving mode.

The first reference time is not limited to 150 minutes. The shorter the first reference time, the earlier the transition to the first power saving mode, thereby further extending the life of the primary battery 90. On the other hand, the longer the first reference time is, the more likely it is that the user who has removed the electronic timepiece 1 sees, before going to bed, that the electronic timepiece 1 is still in the normal mode. The user may change the setting of the first reference time.

Even if the electronic timepiece 1 is motionless at 10 PM, when the output signal from the tilt switch 70 changes thereafter, the electronic timepiece 1 is determined not to be motionless, and the count of the motionless duration is reset. When the output signal from the tilt switch 70 does not change for 150 minutes or more continuously after the reset (i.e., when a 10-minute carry is counted 16 times without a change in the output signal from the tilt switch 70), the first transition condition is satisfied at that time, and the mode is changed to the first power saving mode. The first determination condition is satisfied when the motionless duration reaches the first reference time within the period between the determination start time and the determination end time. Therefore, from the determination end time of 6 AM onwards, until the next determination start time of 10 PM, the count of the motionless duration is not conducted, and the mode is not changed from the normal mode to the first power saving mode.

The determination start time and the determination end time are not limited to 10 PM and 6 AM, respectively. The user may change the determination start time and the determination end time. For example, when the user works at night and sleeps during the day, the determination start time and the determination end time can be set to 9 AM and 5 PM, respectively, so that the mode can be set to be changed to the first power saving mode during the day when the user is sleeping.

After the electronic timepiece 1 has been switched to the first power saving mode, when the electronic timepiece 1 is moved (e.g., worn on the user's wrist) and the output signal from the tilt switch 70 changes, the CPU 11 switches the electronic timepiece 1 from the first power saving mode to the normal mode. Also, when any of the operation buttons 31 or the crown 32 is operated, the CPU 11 switches the electronic timepiece 1 from the first power saving mode to the normal mode.

On the other hand, when a predetermined second transition condition is satisfied while the electronic timepiece 1 remains in the first power saving mode, the CPU 11 switches the electronic timepiece 1 from the first power saving mode to the second power saving mode in which the power consumption is further suppressed. The second transition condition is satisfied when the first power saving mode is maintained for a predetermined second reference time or longer. In other words, the second transition condition is satisfied when the motionless duration exceeds the second reference time, starting from the time of the transition to the first power saving mode. In the present embodiment, the second reference time is set to seven days. Therefore, after the electronic timepiece 1 has been switched to the first power saving mode, when the user does not use the electronic timepiece 1 for seven days, the electronic timepiece 1 is switched to the second power saving mode. However, the second reference time is not limited to seven days. The user may change the setting of the second reference time.

In the second power saving mode, the CPU 11 stops all the pointing hands 211 to 213. In addition, the CPU 11 switches the display of the power saving mark M by the static drive circuit 223 from blinking to lighting. That is, in the second power saving mode, the CPU 11 displays the power saving mark M on the digital display 22 in a different manner than in the first power saving mode. The display of the information such as the date and day of the week by the dynamic drive circuit 222 of the digital display 22 remains off. Further, the CPU 11 stops the operations of the communicator 50, the notifier 60, and the sensor unit 80 in the second power saving mode. Therefore, in the second power saving mode, there is no cooperative transmission and reception with the smartphone 2, no notification by the notifier 60, and no detection of acceleration, angular velocity, or pressure by the sensor unit 80. The notifier 60 and the sensor unit 80 may also be stopped in the first power saving mode.

After the electronic timepiece 1 has been switched to the second power saving mode, when the electronic timepiece 1 is moved (e.g., worn on the user's wrist) and the output signal from the tilt switch 70 changes, the CPU 11 switches the electronic timepiece 1 from the second power saving mode to the normal mode. Also, when any of the operation buttons 31 or the crown 32 is operated, the CPU 11 switches the electronic timepiece 1 from the second power saving mode to the normal mode.

A simulation was performed to compare the life of a primary battery 90 in an electronic timepiece of a comparative example operating only in the normal mode with the life of the primary battery 90 when the first power saving mode is applied. Here, it is assumed that the first power saving mode is in effect for 4.5 hours on each weekday, and the first power saving mode is in effect all day on Saturday and Sunday. As a result of the simulation, it was confirmed that the electronic timepiece 1 to which the first power saving mode is applied can extend the battery life by 10 months by applying the first power saving mode compared to the electronic timepiece of the comparative example.

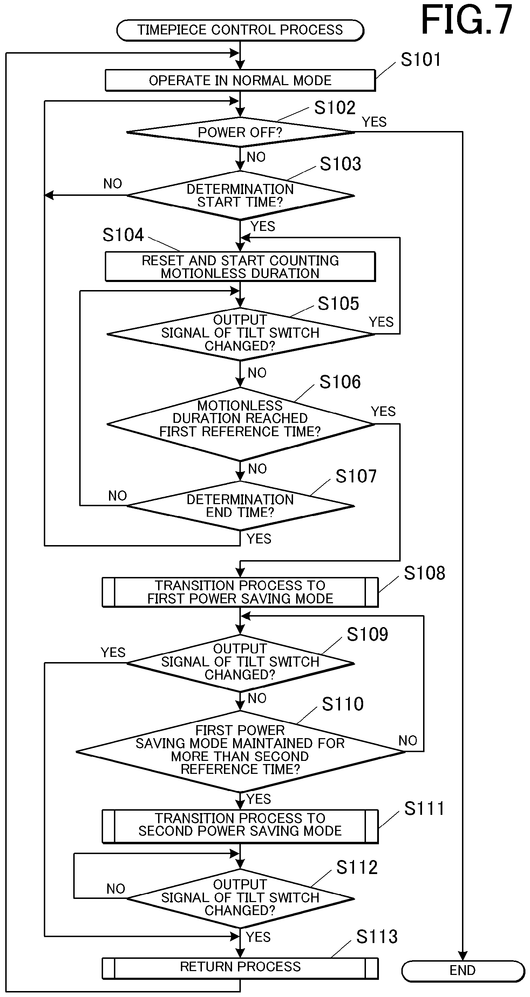

Next, a timepiece control process executed by the CPU 11 to realize the operation described above will be described. FIG. 7 is a flowchart illustrating a control procedure of the timepiece control process. The timepiece control process is started when the electronic timepiece 1 is powered on. When the timepiece control process is started, the CPU 11 operates each component of the electronic timepiece 1 in the normal mode (step S101). That is, the CPU 11 transmits a control signal to the motor drive circuit 218 to cause the pointing hands 211 to 213 to display the time and transmits a control signal to the dynamic drive circuit 222 to cause the digital display 22 to display information such as a date and a day of the week. The CPU 11 determines whether the power has been turned off (step S102). If the CPU 11 determines that the power has not been turned off ("NO" in step S102), the CPU 11 determines whether it is the determination start time (10 PM in the present embodiment) (step S103). If the CPU determines that it is not the determination start time ("NO" in step S103), the CPU 11 returns the process to step S102.

If the CPU determines that it is the determination start time ("YES" in step S103), the CPU 11 resets the motionless duration and starts counting the motionless duration (step S104). Specifically, the CPU 11 counts the number of 10-minute carries that have occurred since the start of step S104. The CPU 11 determines whether the output signal of the tilt switch 70 has changed (Step S105). If the CPU 11 determines that the output signal of the tilt switch 70 has changed ("YES" in step S105), the CPU 11 returns the process to step S104, resets the motionless duration, and restarts the count of the motionless duration.

If the CPU 11 determines that the output signal of the tilt switch 70 has not changed ("NO" in step S105), the CPU 11 determines whether the motionless duration has reached the first reference time (step S106). In the present embodiment, the first reference time is 150 minutes. Therefore, the CPU 11 determines that the motionless duration has reached the first reference time when the 10-minute carry has been counted 16 times since the start of counting the motionless duration in step S104 (including the case where the 10-minute carry occurs at the time of the start). If the CPU 11 determines that the motionless duration has not reached the first reference time ("NO" in step S106), the CPU 11 determines whether it is the determination end time (6 AM in the present embodiment) (step S107). If the CPU 11 determines that it is not the determination end time ("NO" in step S107), the CPU 11 returns the process to step S105. If the CPU 11 determines that it is the determination end time ("YES" in step S107), the CPU 11 returns the process to step S102.

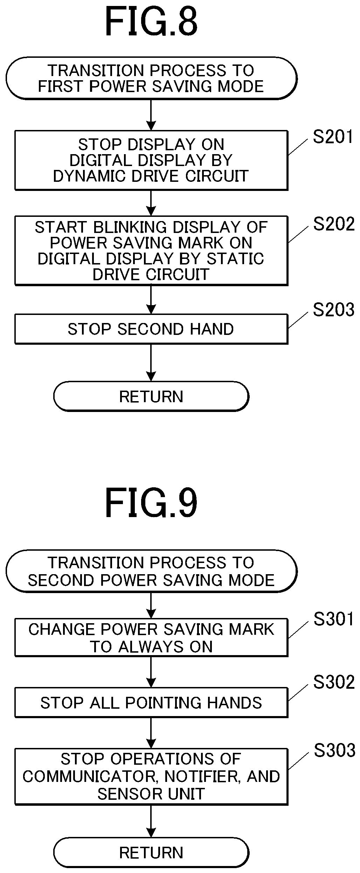

If the CPU 11 determines that the motionless duration has reached the first reference time ("YES" in step S106), the CPU 11 determines that the first transition condition is satisfied and executes a transition process to the first power saving mode (step S108). FIG. 8 is a flowchart illustrating a control procedure of the transition process to the first power saving mode. When the transition process to the first power saving mode is called, the CPU 11 stops the operation of the dynamic drive circuit 222 of the digital display 22 and stops (turns off) the display of the information such as the date and day of the week by the dynamic drive circuit 222 (Step S201). In addition, the CPU 11 transmits a control signal to the static drive circuit 223 of the digital display 22 and causes the static drive circuit 223 to start blinking the power saving mark M (step S202). Further, the CPU 11 transmits a control signal to the motor drive circuit 218 to stop the operation of the stepping motor 217, thereby stopping the rotation of the second hand 213 (step S203). When step S203 is completed, the CPU 11 ends the transition process to the first power saving mode and returns the process to the timepiece control process in FIG. 7. Thereafter, the electronic timepiece 1 operates in the first power saving mode.

When step S108 in FIG. 7 is completed, the CPU 11 determines whether the output signal of the tilt switch 70 has changed (step S109). If the CPU 11 determines that the output signal of the tilt switch 70 has changed ("YES" in step S109), the CPU 11 determines that the electronic timepiece 1 has been moved, such as being worn, and executes a return process described later to return from the first power saving mode to the normal mode (step S113). When the return process is completed, the CPU 11 returns the process to step S101 and causes the electronic timepiece 1 to operate in the normal mode. If the CPU 11 determines that the output signal of the tilt switch 70 has not changed ("NO" in step S109), the CPU 11 determines whether the first power saving mode has been maintained for more than the second reference time (seven days in the present embodiment) (step S110). If the CPU 11 determines that the duration of the first power saving mode is less than seven days ("NO" in step S110), the CPU 11 returns the process to step S109.

If the CPU 11 determines that the first power saving mode has been maintained for more than the second reference time (in step S110, "YES"), the CPU 11 determines that the second transition condition is satisfied and executes a transition process to the second power saving mode (in step S111). FIG. 9 is a flowchart illustrating a control procedure of the transition process to the second power saving mode. When the transition process to the second power saving mode is called, the CPU 11 transmits a control signal to the static drive circuit 223 of the digital display 22 to change the blinking display of the power saving mark M to a lit display (Step S301). In addition, the CPU 11 transmits a control signal to the motor drive circuit 218 to stop the operations of the stepping motors 216 and 217, thereby stopping the rotation of all the pointing hands 211 to 213 (step S302). Further, the CPU 11 stops the operations of the communicator 50, the notifier 60, and the sensor unit 80 (step S303). When step S303 is completed, the CPU 11 ends the transition process to the second power saving mode and returns the process to the timepiece control process in FIG. 7. Thereafter, the electronic timepiece 1 operates in the second power saving mode.

When step S111 in FIG. 7 is completed, the CPU 11 repeatedly determines whether the output signal of the tilt switch 70 has changed (step S112). If the CPU 11 determines that the output signal of the tilt switch 70 has changed ("YES" in step S112), the CPU 11 determines that the electronic timepiece 1 has been moved, such as being worn, and executes the return process described later to return from the second power saving mode to the normal mode (step S113). When the return process is completed, the CPU 11 returns the process to step S101 and causes the electronic timepiece 1 to operate in the normal mode. That is, the CPU 11 receives the latest time information from the smartphone 2 and resumes the operations of the pointing hands 211 to 213 to display the time. In addition, the CPU 11 restarts the display of the information such as the date and the day of the week by the dynamic drive circuit 222, and ends the display of the power saving mark M by the static drive circuit 223. In step S102, if the CPU 11 determines that the power has been turned off ("YES" in step S102), the CPU 11 ends the timepiece control process.

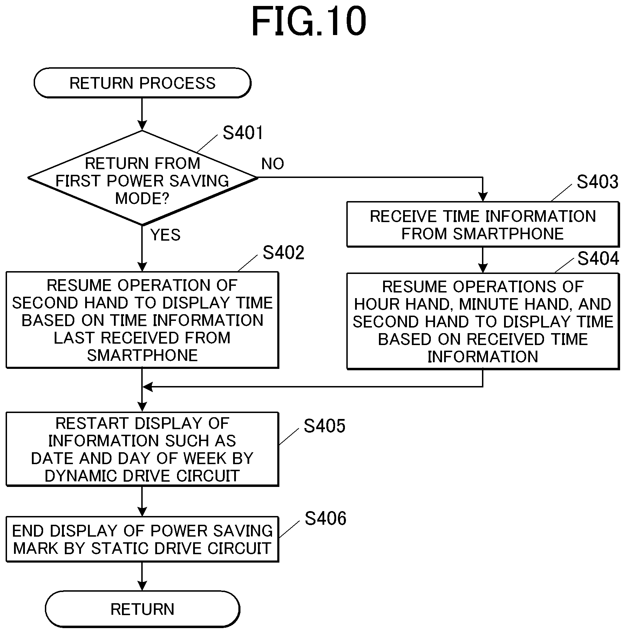

FIG. 10 is a flowchart illustrating a control procedure of the return process. When the return process is started, the CPU 11 determines whether it is a return from the first power saving mode (Step S401). If the CPU 11 determines that it is a return from the first power saving mode ("YES" in step S401), the CPU 11 resumes the operation of the second hand 213 to display the time based on the time information last received from the smartphone 2 (latest time) (step S402). If the CPU 11 determines that it is not a return from the first power saving mode (i.e., it is a return from the second power saving mode) ("NO" in step S401), the CPU 11 receives the time information from the smartphone 2 (step S403) and resumes the operations of the hour hand 211, minute hand 212, and second hand 213 to display the time based on the received time information (step S404). When step S402 or S404 is completed, the CPU 11 restarts the display of the information such as the date and the day of the week by the dynamic drive circuit 222 (step S405), and ends the display of the power saving mark M by the static drive circuit 223 (step S406). When step S406 is completed, the CPU 11 ends the return process and returns the process to the timepiece control process in FIG. 7.

As described above, the electronic timepiece 1 according to the present embodiment includes the tilt switch 70 mounted in a predetermined position and the CPU 11. The CPU 11 changes the operation mode of the electronic timepiece 1 from the normal mode to the first power saving mode based on the duration for which the output signal of the tilt switch 70 remains unchanging. In the first power saving mode, the power consumption is suppressed more than in the normal mode. The technology described in the aforementioned JP 2016-6436A has a problem that it can be applied only to a timepiece that includes a solar cell. On the other hand, according to the present disclosure, it can be determined that the electronic timepiece 1 is not in use by the fact that there is no change in the output signal of the tilt switch 70, and when it is determined that the electronic timepiece 1 is not in use for a certain period of time, the electronic timepiece 1 can be switched to the first power saving mode. This makes it possible, with a simple configuration using the tilt switch 70, to switch the electronic timepiece 1 to the first power saving mode at a suitable time without any special operation by the user. In addition, compared to the conventional method of constantly operating an acceleration sensor and a gyro sensor to determine that the electronic timepiece 1 is not in use, the time of the transition to the first power saving mode can be determined with less power consumption. Therefore, the battery life of the electronic timepiece 1 with a simple configuration can be effectively extended.

The tilt switch 70 has the passage 72 through which the metal ball 71, which is a movable body with electrical conductivity, can move. The passage 72 has the one end 721 provided with the contacts 73 that are electrically connected to each other when brought into contact with the metal ball 71, and the other end 722 opposite to the one end 721. The tilt switch 70 is mounted in a predetermined position such that when the electronic timepiece 1 is worn on the back of the hand on the wrist, the one end 721 is closer to the little finger of the hand than the other end 722. Alternatively, in a predetermined position, the tilt switch 70 is mounted such that the direction D2 from the other end 722 to the one end 721 of the passage 72 and the direction D1 from 6 o'clock to 12 o'clock of the electronic timepiece 1 are the same or form an acute angle. This allows the tilt switch 70 to be easily switched to the ON state due to natural actions of the user wearing the electronic watch 1. This prevents the tilt switch 70 from remaining in either the ON or OFF state (without a change in the output signal does) even when the user is wearing the electronic timepiece 1. Therefore, it is possible to correctly determine whether the electronic timepiece 1 is in use.

The CPU 11 sets the determination start time and the determination end time to 10 PM and 6 AM, respectively. This aligns with a period during which the user sleeping at night is highly likely to be asleep. It is only within the period between the determination start time and the determination end time that the CPU 11 determines whether to execute the transition process to the first power saving mode (steps S104, S105, and S106 in FIG. 7). In other words, outside of the period between the determination start time and the determination end time, the CPU 11 does not determine whether to execute the transition process to the first power saving mode. Consequently, during periods when the user is likely to be wearing the electronic timepiece 1 and moving around, the CPU 11 does not determine whether to execute the transition process to the first power saving mode. This effectively reduces the consumption of the primary battery 90. On the other hand, the CPU 11 determines whether to execute the transition process to the first power saving mode only during the period when the user is not likely to wear the electronic timepiece 1. This makes it possible to effectively extend the battery life of the electronic timepiece 1 with a simple configuration. Further, the determination start time and the determination end time can be set by the user. This allows a user who sleeps during the day to adjust the determination start time and the determination end time according to his/her typical sleeping schedule. This makes it possible to provide the electronic timepiece 1 with a simple configuration that can effectively extend the battery life for a wide range of users.

The CPU 11 changes the operation mode of the electronic timepiece 1 to the second power saving mode based on the duration for which the tilt switch 70 remains in either the ON or OFF state in the first power saving mode. In the second power saving mode, the power consumption is suppressed even more than in the first power saving mode. Thus, when the user does not use the electronic timepiece 1 for a long period of time, the power consumption can be further suppressed to extend the battery life.

The electronic timepiece 1 also includes the digital display 22 that performs digital display. The CPU 11 causes the digital display 22 to display the power saving mark M in the first power saving mode. The CPU 11 causes the digital display 22 to display the power saving mark M in the second power saving mode in a different manner than in the first power saving mode. This allows the electronic timepiece 1 to visually inform the user that the electronic timepiece 1 is operating in the first or second power saving mode.

The CPU 11 communicates data with the smartphone 2 via the communicator 50 at a predetermined time interval in the first power saving mode. The CPU 11 does not communicate the data with the smartphone 2 via the communicator 50 in the second power saving mode. Accordingly, for example, the time information can be received from the smartphone 2 during the first power saving mode. This allows the correct time to be displayed when the electronic timepiece 1 is returned to the normal mode. In addition, this also makes it possible to transmit information such as the number of steps, the atmospheric pressure, and the altitude based on the data of the sensor unit 80 acquired during the day to the smartphone 2 during the first power saving mode. Further, the power consumption in the second power saving mode can be effectively reduced.

The CPU 11 changes the operation mode of the electronic timepiece 1 to the first power saving mode based only on the duration for which there is no change in the output signal of the tilt switch 70. This allows the time of the transition to the first power saving mode to be suitably determined by simple processing in the electronic timepiece 1 with a simple configuration.

The electronic timepiece 1 includes only the primary battery 90 as the power source. By applying the first power saving mode with this configuration to extend the battery life, it is possible to delay the timing of battery replacement. This reduces the time and effort of the user.

A method for controlling the electronic timepiece 1 according to the present embodiment includes changing the operation mode of the electronic timepiece 1, based on the duration for which there is no change in the output signal of the tilt switch 70, from the normal mode to the first power saving mode in which the power consumption is suppressed more than in the normal mode. This allows the battery life of the electronic timepiece 1 with a simple configuration to be effectively extended.

The program 131 according to the present embodiment causes the CPU 11 as a computer to function as a controller. The controller changes the operation mode of the electronic timepiece 1, based on the duration for which there is no change in the output signal of the tilt switch 70, from the normal mode to the first power saving mode in which the power consumption is suppressed more than in the normal mode. This allows the battery life of the electronic timepiece 1 with a simple configuration to be effectively extended.

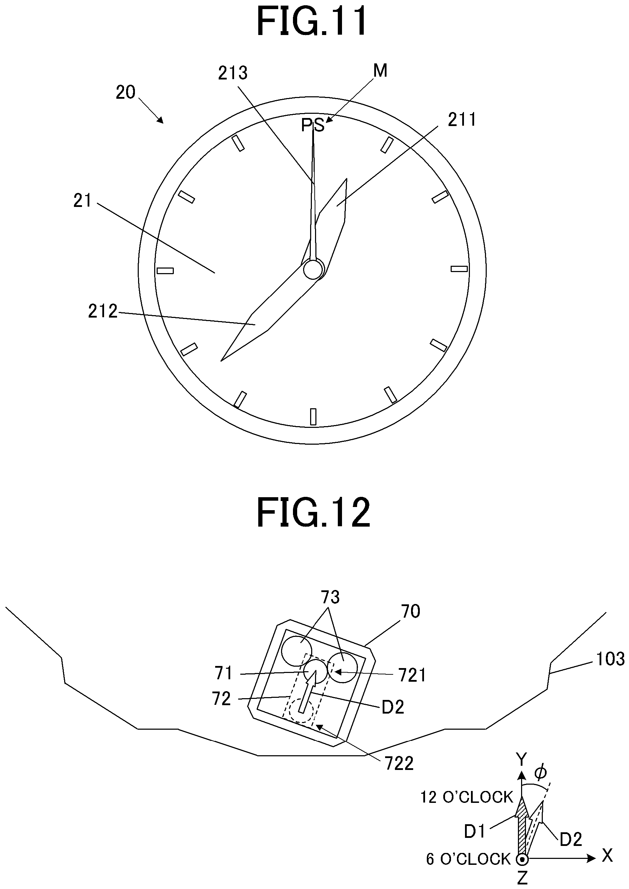

The present disclosure is not limited to the above embodiment, and various modifications are possible. For example, in the above embodiment, the electronic timepiece 1 of a so-called combinatorial type including the analog display 21 and the digital display 22 has been exemplified, but the present invention is not limited thereto. The electronic timepiece 1 may be an analog timepiece that has an analog display 21 and does not have a digital display 22. The electronic timepiece 1 may be a digital timepiece that has a digital display 22 and does not have an analog display 21. FIG. 11 is a diagram illustrating a display 20 when the electronic timepiece 1 is an analog timepiece. In the analog display 21 in FIG. 11, the power saving mark M is located in place of the hour marker at the 12 o'clock position. This allows the power saving mark M to be indicated by the second hand 213 stopped at the 12 o'clock position in both the first and second power saving modes. Therefore, the second hand 213 can indicate that the mode is the power saving mode. In addition, a function hand separate from the second hand 213 may be provided, and the power saving mark M may be indicated by the function hand in both the first and second power saving modes. However, in the first power saving mode, the hour hand 211 and the minute hand 212 display the correct time. Thus, even without the power saving mark M, the user can recognize that the electronic timepiece 1 is not stopped due to a malfunction or other reasons. Therefore, in an analog timepiece, the power saving mark M may be omitted.

The orientation of the tilt switch 70 is not limited to the 12 o'clock direction. For example, as illustrated in FIG. 12, the tilt switch 70 may be mounted such that the direction D2 from the other end 722 to the one end 721 of the passage 72 and the direction D1 from 6 o'clock to 12 o'clock of the electronic timepiece 1 form an acute angle φ. Even in a configuration where the direction D2 and the direction D1 form the acute angle φ, the tilt switch 70 is switched to the ON state by a natural action of the user.

The electronic timepiece 1 may be worn on the wrist in a manner that positions the housing 101 on the palm side (the inside of the wrist). In this mounting configuration, natural actions of the user are likely to cause the 6 o'clock side to be lower than the 12 o'clock side. This makes it difficult for the tilt switch 70, which is mounted in a way that aligns the direction D2 with the direction D1 when viewed from the +Z direction, to be in the ON state. Therefore, in such a mounting configuration, in order to make it easier for the tilt switch 70 to be switched to the ON state due to natural motions of the user, in addition to the tilt switch 70 mounted in a way that aligns the direction D2 with the direction D1 when viewed from the +Z direction, a tilt switch 70 may be added, which is mounted so that direction D2 is opposite to the direction D1 when viewed from the +Z direction. Alternatively, in addition to the tilt switch 70 mounted in a way that aligns the direction D2 with the direction D1 when viewed from the +Z direction, a tilt switch 70 mounted so that the direction D2 is oriented from 9 o'clock to 3 o'clock when viewed from the +Z direction, and a tilt switch 70 mounted so that the direction D2 is oriented from 3 o'clock to 9 o'clock when viewed from the +Z direction may be added.

The electronic timepiece 1 according to the present embodiment is very effective in extending the battery life of the electronic timepiece 1 that operates only with the primary battery 90. However, the electronic timepiece 1 may include a secondary battery in addition to the primary battery 90 or may include only a secondary battery.

For a user who prefers the electric timepiece 1 to operate in the normal mode at all times, the setting may be switchable between a setting that permits the transition to the first power saving mode and the second power saving mode and a setting that prohibits the transition.

Instead of changing the mode in three stages of the normal mode, the first power saving mode, and the second power saving mode, the second power saving mode may be omitted, and the mode may be changed in two stages of the normal mode and the first power saving mode.

An example of receiving the time information from the smartphone 2 via the communicator 50 has been illustrated, but the method of receiving the time information is not limited thereto. For example, a configuration may be adopted in which standard radio waves can be received, and the time counted by the timing unit 40 may be corrected based on information of the received standard radio waves. Alternatively, the time information may be acquired by receiving and decoding radio waves transmitted from a positioning satellite of a global navigation satellite system (GNSS) such as the global positioning system (GPS).

In the above description, an example has been disclosed in which the flash memory is used for the storage 13 as a computer-readable medium storing the program according to the present disclosure, but the present disclosure is not limited to this example. A carrier wave is also applied to the present disclosure as a medium that provides data of the program according to the present disclosure via a communication line.

The detailed configuration and the detailed operation of each component of the electronic timepiece 1 in the above embodiment can be appropriately changed without departing from the gist of the present disclosure.

Although the embodiments according to the present disclosure have been described, the scope of the present disclosure is not limited to the above-described embodiments and includes the scope of disclosure as described in the claims and equivalents thereof.

This application claims the benefit of Japanese Patent Application No. 2024-009890, filed January 26, 2024, which is hereby incorporated by reference wherein in its entirety.

## Claims

1. An electronic timepiece (1), comprising:
a tilt switch (70) mounted in a predetermined position; and
a controller (11) that changes an operation mode of the electronic timepiece (1), based on a duration for which there is no change in an output signal of the tilt switch (70), from a normal mode to a first power saving mode in which power consumption is suppressed more than in the normal mode.

2. The electronic timepiece (1) according to claim 1, wherein
the tilt switch (70) includes a passage (72) in which a movable body (71) with electrical conductivity moves,
the passage (72) has one end (721) and another end (722) opposite to the one end (721),
the one end (721) is provided with a contact (73) configured to conduct electricity when brought into contact with the movable body (71), and
the predetermined position of the tilt switch (70) is such that
when the electronic timepiece (1) is worn on a back of a hand on a wrist, the one end (721) is closer to a little finger than the other end (722), or that
a direction from the other end (722) to the one end (721) and a direction from 6 o'clock to 12 o'clock of the electronic timepiece (1) are the same or form an acute angle.

3. The electronic timepiece (1) according to claim 1 or 2, wherein
the controller (11) determines whether to change the operation mode to the first power saving mode within a period between a predetermined determination start time and a predetermined determination end time, and
does not determine whether to change the operation mode to the first power saving mode outside of the period between the predetermined determination start time and the predetermined determination end time.

4. The electronic timepiece (1) according to any one of claims 1 to 3, wherein the controller (11) changes the operation mode, based on a duration for which the tilt switch (70) remains in either an ON state or an OFF state in the first power saving mode, to a second power saving mode in which the power consumption is suppressed more than in the first power saving mode.

5. The electronic timepiece (1) according to claim 4, further comprising a digital display (22) that performs digital display, wherein
the controller (11) causes the digital display (22) to display a predetermined mark (M) in the first power saving mode, and
causes the digital display (22) to display the predetermined mark (M) in the second power saving mode in a different manner than in the first power saving mode.

6. The electronic timepiece (1) according to claim 4, wherein
the controller (11) communicates data with an external device via a communicator (50) at a predetermined time interval in the first power saving mode, and
does not communicate the data with the external device via the communicator (50) in the second power saving mode.

7. The electronic timepiece (1) according to any one of claims 1 to 6, wherein the controller (11) changes the operating mode of the electronic timepiece (1) to the first power saving mode based only on the duration.

8. The electronic timepiece (1) according to any one of claims 1 to 6, further comprising a primary battery (90) as a sole power source.

9. A method for controlling an electronic timepiece (1) that includes:
a controller (11); and
a tilt switch (70) mounted in a predetermined position, the method comprising changing an operation mode of the electronic timepiece (1), based on a duration for which there is no change in an output signal of the tilt switch (70), from a normal mode to a first power saving mode in which power consumption is suppressed more than in the normal mode.

10. The method according to claim 9, wherein
the tilt switch (70) includes a passage (72) in which a movable body (71) with electrical conductivity moves,
the passage (72) has one end (721) and another end (722) opposite to the one end (721),
the one end (721) is provided with a contact (73) configured to conduct electricity when brought into contact with the movable body (71), and
the predetermined position of the tilt switch (70) is such that
when the electronic timepiece (1) is worn on a back of a hand on a wrist, the one end (721) is closer to a little finger than the other end (722), or that
a direction from the other end (722) to the one end (721) and a direction from 6 o'clock to 12 o'clock of the electronic timepiece (1) are the same or form an acute angle.

11. The method according to claim 9 or 10, further comprising changing the operation mode, based on a duration for which the tilt switch (70) remains in either an ON state or an OFF state in the first power saving mode, to a second power saving mode in which the power consumption is suppressed more than in the first power saving mode.

12. A program, causing a computer of an electronic timepiece (1) that includes a tilt switch (70) mounted in a predetermined position to change an operation mode of the electronic timepiece (1), based on a duration for which there is no change in an output signal of the tilt switch (70), from a normal mode to a first power saving mode in which power consumption is suppressed more than in the normal mode.

13. The program according to claim 12, wherein
the tilt switch (70) includes a passage (72) in which a movable body (71) with electrical conductivity moves,
the passage (72) has one end (721) and another end (722) opposite to the one end (721),
the one end (721) is provided with a contact (73) configured to conduct electricity when brought into contact with the movable body (71), and
the predetermined position of the tilt switch (70) is such that
when the electronic timepiece (1) is worn on a back of a hand on a wrist, the one end (721) is closer to a little finger than the other end (722), or that
a direction from the other end (722) to the one end (721) and a direction from 6 o'clock to 12 o'clock of the electronic timepiece (1) are the same or form an acute angle.

14. The program according to claim 12 or 13, wherein the program causes the computer to change the operation mode, based on a duration for which the tilt switch (70) remains in either an ON state or an OFF state in the first power saving mode, to a second power saving mode in which the power consumption is suppressed more than in the first power saving mode.
